(19) Europäisches Patentamt / European Patent Office / Office européen des brevets

(11) **EP 2 963 883 B1**

(12) **FASCICULE DE BREVET EUROPEEN**

(45) Date de publication et mention de la délivrance du brevet:
**26.04.2017 Bulletin 2017/17**

(51) Int Cl.:
***H04L 27/26*** *(2006.01)*

(21) Numéro de dépôt: **15175371.2**

(22) Date de dépôt: **06.07.2015**

(54) **MÉTHODE DE POURSUITE DE PHASE AVEUGLE POUR RÉCEPTEUR FBMC**

METHODE ZUR BLINDEN PHASENVERFOLGUNG FÜR FBMC-EMPFÄNGER

METHOD FOR BLIND PHASE TRACKING FOR FBMC RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2014 FR 1456434**

(43) Date de publication de la demande:
**06.01.2016 Bulletin 2016/01**

(73) Titulaire: **Commissariat à l'Énergie Atomique et aux Énergies Alternatives 75015 Paris (FR)**

(72) Inventeur: **DORE, Jean-Baptiste 38950 SAINT-MARTIN-LE VINOUX (FR)**

(74) Mandataire: **Brevalex 56, Boulevard de l'Embouchure B.P. 27519 31075 Toulouse Cedex 2 (FR)**

(56) Documents cités:
• **PEIMAN AMINI ET AL: "Packet Format Design and Decision Directed Tracking Methods for Filter Bank Multicarrier Systems", EURASIP JOURNAL ON ADVANCES IN SIGNAL PROCESSING, vol. 38, no. 5, 1 janvier 2010 (2010-01-01), pages 98-14, XP055177916, ISSN: 1687-6172, DOI: 10.1109/TCSII.2009.2034197**

**Description**

## DOMAINE TECHNIQUE

La présente invention concerne de manière générale le domaine des systèmes de télécommunication utilisant une modulation multi-porteuse à banc de filtres, encore dénommés systèmes FBMC (*Filter Bank Multi-Carrier*). La présente invention concerne plus particulièrement une méthode de poursuite de phase aveugle dans un récepteur FBMC.

## ÉTAT DE LA TECHNIQUE ANTÉRIEURE

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (*Orthogonal Frequency Division Multiplexing*). Celle-ci est mise en oeuvre dans les réseaux locaux sans fil WLAN, WiFi, dans l'accès internet sans fil à haut débit (WiMAX), les systèmes de radiodiffusion numérique (DVB-T, ISDB-T, DAB), les liaisons numériques asymétriques (xDSL), la quatrième génération de téléphonie cellulaire (LTE), etc.

Dans un système de transmission OFDM, chaque bloc de symboles OFDM est précédé d'un intervalle de garde ou bien d'un préfixe cyclique, de longueur supérieure à l'étalement temporel de la réponse impulsionnelle du canal, de manière à éliminer l'interférence intersymbole. L'insertion d'un intervalle de garde ou d'un préfixe conduit toutefois à une perte d'efficacité spectrale. Enfin, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

Une modulation par banc de filtres de synthèse ou FBMC (*Filter Bank Multi Carrier*) peut être utilisée comme alternative à la modulation OFDM.

Une comparaison entre les systèmes FBMC et les systèmes OFDM est présentée dans l'article de B. Farhang-Bouroujeny intitulé « OFDM versus filter bank multicarrier » publié dans IEEE Signal Processing Magazine, pp. 91-112, Mars 2011.

Le principe de la modulation FBMC est basé sur une synthèse par banc de filtres à l'émission et une analyse par banc de filtres à la réception.

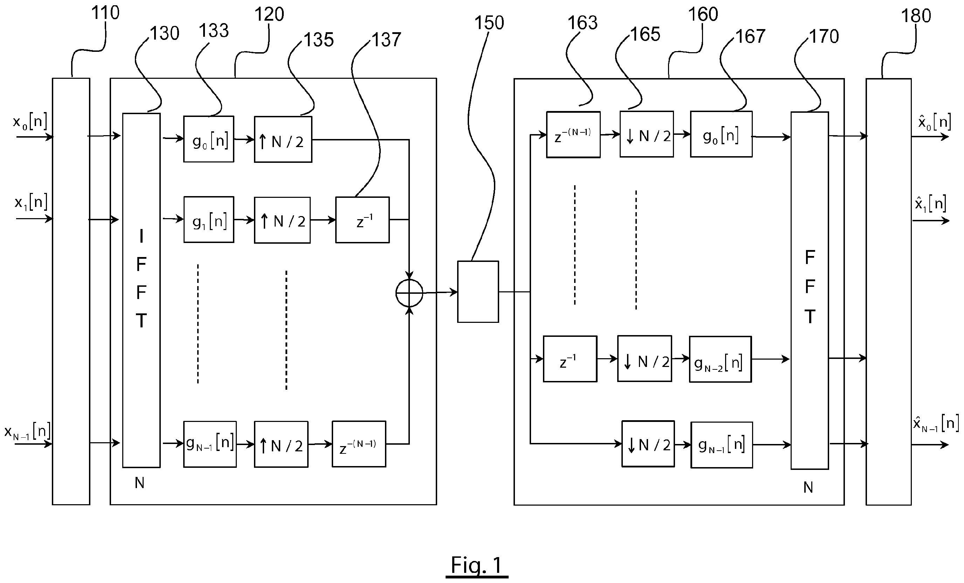

La Fig. 1 représente de manière schématique la structure d'un premier système d'émission/réception FBMC connu de l'état de la technique.

Cette structure a été décrite en détail dans l'article de B. Hirosaki intitulé « An orthogonally multiplexed QAM system using the discrète Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002.

Au niveau de l'émetteur, les symboles de modulation QAM à transmettre avec une cadence $Nf$ où $f = 1/T$ sont groupés par blocs de taille $N$, $x_0[m],...,x_{N-1}[m]$, où $m$ est l'indice temporel du bloc. Chaque bloc de $N$ symboles est fourni en parallèle à $N$ voies d'entrée d'un module de prétraitement 110, dit prétraitement OQAM (Offset QAM). Ce module de prétraitement effectue une modulation des données de type OQAM, c'est-à-dire démultiplexe temporellement la partie réelle et la partie imaginaire de $x_k[m]$ avec une cadence de $2f$.

Les échantillons ainsi obtenus sont fournis sous la forme de blocs de taille $N$ à un banc de filtres de synthèse 120, constitué d'un module IFFT (transformée de Fourier rapide inverse) de taille $N$, 130, d'une pluralité $N$ de filtres polyphasés 133, d'une pluralité de sur-échantillonneurs 135, de facteur $M = N/2$, en sortie des différents filtres polyphasés, et enfin d'une pluralité de retards, 137, arrangés en parallèle et variant de 0 à $N$ - 1 périodes d'échantillonnage. Chacune des $N$ voies de traitement correspond à un sous-canal.

Les sorties des filtres polyphasés, sur-échantillonnées et retardées sont sommées par l'additionneur 139 avant translation à une fréquence RF (non représentée) et transmission sur le canal 150.

Les filtres polyphasés sont des versions translatées en fréquence de $k / MT$ d'un filtre prototype dont la réponse impulsionnelle est de durée $LT$, autrement dit la sortie d'un filtre polyphasé recouvre temporellement la sortie du filtre polyphasé adjacent de $M$ échantillons. Il en résulte qu'une sortie de filtre polyphasé recouvre temporellement $L$ autres sorties de filtres polyphasés. Le coefficient $L$ est dénommé pour cette raison coefficient de recouvrement (*overlapping factor*).

Du côté du récepteur, après démodulation en bande de base, le signal reçu est échantillonné avec une cadence $Nf$. Les échantillons sont fournis sous forme de blocs de taille $N$ à un banc de filtres d'analyse, 160, comprenant une pluralité de retards, 163, arrangés en parallèle et variant de 0 à $N$ - 1 périodes d'échantillonnage, dans l'ordre inverse des retards 137. Les flux d'échantillons issus des différents retards sont ensuite décimés d'un facteur $M = N/2$ par les décimateurs 165 puis filtrés par les filtres d'analyse 167. Les filtres d'analyse ont une réponse impulsionnelle conjuguée et inversée temporellement par rapport au filtre de synthèse correspondant. Etant donné que le filtre prototype est à valeurs réelles, et symétrique par inversion temporelle, on peut montrer qu'un filtre d'analyse a la même réponse impulsionnelle que le filtre de synthèse correspondant. La combinaison d'un filtre de synthèse avec le filtre d'analyse correspondant (produit des fonctions de transfert) donne un filtre de Nyquist.

Les symboles en sortie des filtres de synthèse font ensuite l'objet d'une FFT (transformée de Fourier rapide) de taille *N* en 170, les différentes composantes fréquentielles de la FFT étant ensuite fournies au module de post-traitement 180 effectuant un traitement inverse de celui du prétraitement 110.

Le filtrage de synthèse/analyse étant réalisé dans le domaine temporel, respectivement en sortie du module IFFT et en entrée du module FFT, le système FBMC illustré en Fig. 1 sera dit implémenté dans le domaine temporel.

Le système FBMC est également susceptible d'une implémentation dans le domaine fréquentiel comme décrit dans le document de M. Bellanger et al. intitulé « FBMC physical layer : a primer » disponible sur le site www.ict-phydyas.org. Dans ce cas, le filtrage de synthèse est réalisé dans le domaine fréquentiel, en amont du module IFFT et, de manière similaire, le filtrage d'analyse est réalisé dans le domaine fréquentiel, en amont du module FFT.

Quel que soit le type d'implémentation, un des principaux problèmes à résoudre est d'estimer et de corriger les termes de phase pouvant affecter les symboles des différentes sous-porteuses (en sortie du module de FFT pour une implémentation temporelle et sortie des filtres d'analyse pour une implémentation fréquentielle). Ces termes de phase peuvent provenir de différentes origines.

Tout d'abord, ils peuvent être dus à une synchronisation imparfaite entre l'émetteur et le récepteur, plus précisément entre l'oscillateur de l'émetteur assurant la translation en bande RF et l'oscillateur du récepteur assurant la translation inverse en bande de base du signal reçu. Par synchronisation imparfaite on entend ici une différence de fréquence ou CFO (*Carrier Frequency Offset*). Même lorsque l'on prévoit une estimation et une correction de fréquence au niveau de récepteur, cette correction est généralement insuffisante en raison d'un biais de l'estimateur et un résidu de phase peut être présent.

Ensuite, ces termes de phase peuvent être dus à une dérive de phase et/ou de fréquence de l'oscillateur du récepteur. Cette dérive de phase/de fréquence peut être notamment imputable au vieillissement, à des variations de température, où à une instabilité intrinsèque des oscillateurs. Dans ce cas, il n'est pas possible de synchroniser les oscillateurs et l'on doit effectuer une compensation de phase au fur et à mesure de la réception.

Enfin, ces termes de phase peuvent être dus des variations des caractéristiques du canal de propagation (décalage Doppler par exemple). En effet, lorsque l'estimation de canal ne permet pas d'effectuer une égalisation suffisamment rapide, des termes de phase non compensée peuvent apparaître au niveau du récepteur.

Différentes techniques de poursuite de phase sont connues de l'état de la technique. On distinguera schématiquement les techniques supervisées, les techniques aveugles et les techniques hybrides. Les techniques supervisées font appel à des symboles pilotes répartis de manière prédéterminée au sein du flux de symboles à transmettre. Grâce à ces symboles pilotes, une mesure de la phase peut être effectuée de manière fiable et périodique. Les techniques dites aveugles ne suppose en revanche aucune connaissance *a priori* des symboles transmis mais recourent soit à des propriétés statistiques du signal soit à une première estimation grossière des symboles reçus (*decision directed estimation*). Enfin, les techniques hybrides mettent successivement en oeuvre des estimations supervisées et des estimations aveugles. Par exemple, lorsque les données sont transmises sous forme de paquets comportant un préambule et une charge utile, il est connu d'incorporer des symboles pilotes dans le préambule pour permettre une estimation supervisée en début de paquet. Cette estimation peut ensuite se poursuivre de manière aveugle lors de la réception de la charge utile.

Les techniques d'estimation supervisée ont été largement explorées dans le cadre de la modulation OFDM. On en trouvera notamment des exemples dans l'article de M. Speth et al. intitulé « Optimum receiver design for OFDM-based broadband transmission-Part II » : a case study » publié dans IEEE Trans. on Comm., Vol. 49, No. 4, Avril 2011, pages 571-578.

Ces techniques d'estimation ne sont toutefois pas facilement transposables aux récepteurs FBMC en raison des spécificités de la modulation OQAM. En effet, à supposer même que le récepteur FBMC soit parfaitement synchronisé avec l'émetteur et en absence de bruit, un symbole complexe obtenu en sortie du module FFT, à l'instant *m* et sur la sous-porteuse *k*, peut s'exprimer sous la forme :

$$s_k(m) = x_k(m) + j\varepsilon_k(m) \tag{1}$$

lorsque le symbole $x_k(m)$ est transmis sur la partie réelle et :

$$s_k(n) = \varepsilon_k(n) + jx_k(n) \qquad (2)$$

où $\varepsilon_k(n)$ est un terme d'interférence dépendant des données sur les sous-porteuses adjacentes et en des instants adjacents ainsi que de la réponse du filtre prototype.

Si l'on prend le cas d'une donnée transmise sur la partie réelle et si l'on suppose que le symbole reçu est affecté d'un terme de phase, celui-ci peut s'exprimer sous la forme :

$$r_k(m) = (x_k(m) + j\varepsilon_k(m))\exp(j\phi(m)) + n_k(m) \qquad (3)$$

où $x_k(m)$ est le symbole réel porté par la sous-porteuse $k$, $n_k(m)$ est un échantillon de bruit sur la porteuse $k$, à l'instant $m$ et $\phi(m)$ est le déphasage en cet instant.

Une méthode de poursuite de phase aveugle pour un récepteur FBMC a été proposée dans l'article de P. Amini et al. intitulé « Packet format design and decision directed tracking methods for filter bank multicarrier systems » publié dans EURASIP Journal on Advances in Signal Processing, 2010. Cette méthode fait appel à une information partielle de chaque symbole en estimant le déphasage au moyen de :

$$\hat{\phi}(m) = \arg\left(\sum_{k=0}^{K-1} r_k(m)\hat{x}_k(m)\right) \qquad (4)$$

où $\hat{x}_k(m)$ est le symbole (réel) estimé par le récepteur pour l'instant $m$ et la sous-porteuse $k$. Autrement dit :

$$\hat{\phi}(m) = \arg\left(\sum_{k=0}^{K-1} |x_k(m)|^2 \exp(j\phi) + jI_k(m,\phi) + N_k(m)\right) \qquad (5)$$

avec $I_k(m,\phi) = \varepsilon_k(m)x_k(m)\exp(j\phi)$ et $N_k(m) = x_k(m)n_k(m)$. Si le nombre de termes sous le signe somme est suffisamment important (grand nombre de porteuses), la somme des termes $I_k(m,\phi)$ tend à s'annuler en moyenne, et l'estimateur présente de bonnes performances. En pratique toutefois, le terme d'interférence $I_k(n,\phi)$ peut être localement très grand devant $|x_k(n)|^2$, ce qui conduit à des estimations de phase erronées et un taux d'erreurs symbole élevé.

Le but de la présente invention est de proposer une méthode de poursuite de phase aveugle ou hybride dans un récepteur FBMC, qui ne présente pas les inconvénients de l'état de la technique, en particulier qui permette de réduire substantiellement le taux d'erreurs symbole tout en étant particulièrement simple et robuste.

## EXPOSÉ DE L'INVENTION

La présente invention est définie par une méthode de poursuite de phase aveugle pour récepteur FBMC telle que donnée par la revendication 1. Des modes de réalisation avantageux sont donnés dans les revendications dépendantes.

## BRÈVE DESCRIPTION DES DESSINS

D'autres caractéristiques et avantages de l'invention apparaîtront à la lecture de modes de réalisation préférentiels de l'invention, en référence aux figures jointes parmi lesquelles :

La Fig. 1 représente un système de télécommunication FBMC connu de l'état de la technique ;
La Fig. 2 représente un récepteur FBMC utilisant une méthode de poursuite de phase selon un mode général de réalisation de l'invention ;
La Fig. 3A représente un module d'estimation de phase permettant de mettre en oeuvre une poursuite de phase selon un premier mode de réalisation de l'invention ;
La Fig. 3B représente un module d'estimation de phase permettant de mettre en oeuvre une poursuite de phase selon un second mode de réalisation;
La Fig. 3C représente un module d'estimation de phase permettant de mettre en oeuvre une poursuite de phase selon un troisième mode de réalisation ;

La Fig. 4 représente les performances du module d'estimation de phase la Fig. 3B;

Les Figs. 5A-5C représentent les performances d'une méthode de poursuite de phase selon un mode de réalisation de l'invention, pour différentes valeurs d'offset de fréquence entre l'émetteur et le récepteur FBMC.

Les Figs. 6A-6B illustrent les performances d'un récepteur FBMC utilisant une méthode de poursuite de phase selon un mode de réalisation de l'invention.

## EXPOSÉ DÉTAILLÉ DE MODES DE RÉALISATION PARTICULIERS

Nous considérerons dans la suite un récepteur FBMC comme décrit dans la partie introductive, ce récepteur pouvant être implémenté dans le domaine temporel ou dans le domaine fréquentiel, de manière connue en soi. Dans la suite, nous supposerons, en absence de remarques spécifiques que le récepteur FBMC est implémenté dans le domaine temporel. L'homme du métier comprendra toutefois que la méthode de poursuite de phase trouve à s'appliquer quel que soit le type d'implémentation.

L'idée à la base de l'invention est d'effectuer une estimation de phase à l'aide de symboles estimés de manière simplifiée, dont les parties réelles et imaginaires sont exprimées sur un seul bit.

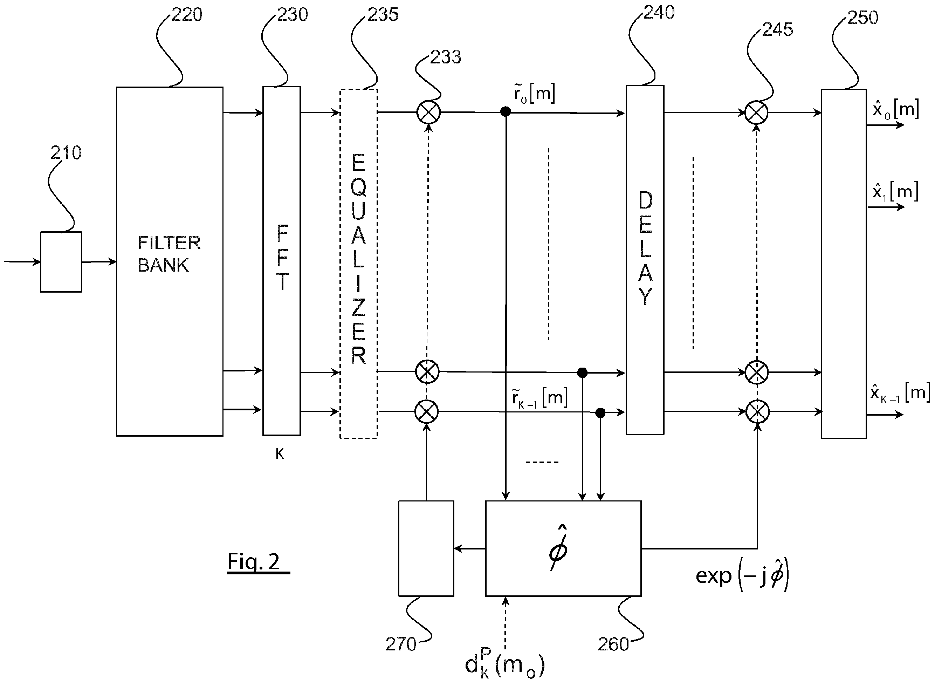

Plus précisément, la Fig. 2 représente un récepteur FBMC implémentant une méthode de poursuite de phase selon un mode général de réalisation de l'invention.

Le récepteur FBMC possède une structure générale similaire à celle décrite en relation avec la Fig. 1. Plus précisément, il comprend un module de translation en bande de base 210, un banc de filtres d'analyse, 220, suivi d'un module de FFT. Les composantes fréquentielles en sortie du module de FFT sont égalisées dans le domaine fréquentiel au moyen d'un égaliseur 235, de manière connue en soi. Dans le cas d'une implémentation du récepteur FBMC dans le domaine fréquentiel, le filtrage d'analyse et l'égalisation sont réalisées après le module de FFT. Bien entendu, si le canal de transmission est purement additif, l'égalisation n'est pas nécessaire. Les composantes fréquentielles, le cas échéant égalisées, sont considérées après filtrage par les filtres d'analyse et la FFT, l'ordre des opérations dépendant du type d'implémentation.

Ces composantes fréquentielles sont ensuite retardées dans un buffer FIFO 240 avant d'être chacune multipliées par un facteur correctif de phase dans les multiplicateurs 245 et de subir une démodulation OQAM dans le module 250. Cette démodulation est suivie par un décodage canal (non représenté).

Le récepteur FBMC comprend en outre un module estimateur de phase, 260, à l'aide de symboles simplifiés, comme détaillé plus loin. Cet estimateur effectue une estimation du déphasage entre les composantes fréquentielles et ces symboles simplifiés. La phase ainsi estimée, $\hat{\phi}$, sert à calculer un facteur correctif de phase $\exp(-j\hat{\phi})$. Le facteur correctif de phase est multiplié avec chacune des composantes fréquentielles, retardées par le buffer FIFO 240. Le retard correspond au temps de traitement dans l'estimateur. Avantageusement, pour des raisons de cadencement le retard est choisi égal à la période de calcul de la FFT et l'estimation de phase est réalisée dans ce même temps.

La correction de phase par les multiplicateurs 245 est effectuée à chaque bloc de FFT, c'est-à-dire à chaque symbole FBMC. Cette correction de phase « instantanée » est avantageusement complétée par une correction de phase en « moyenne ». Pour ce faire, les phases estimées $\hat{\phi}$ ou les facteurs de correction de phase $\exp(\hat{\phi})$, sont moyenné(e)s au moyen d'un filtre récursif (filtre IIR) passe-bas pour fournir un facteur correctif moyen. La constante de temps du filtre passe-bas peut être choisie pour être de l'ordre de la durée d'un paquet. Le facteur correctif moyen est alors appliqué en sortie du module de FFT (avant ou après l'égaliseur 235, lorsque celui-ci est présent) sur l'ensemble des composantes fréquentielles grâce aux multiplicateurs 233. Alternativement, le facteur correctif moyen peut être appliqué en sortie du module de translation en bande de base 210.

En sus de l'estimation aveugle de phase, le module 260 peut effectuer périodiquement une estimation de phase à partir de symboles pilotes, par exemple de symboles pilotes présents dans le préambule des paquets. Cette variante a été représentée dans la Fig. 2 par la prise en compte optionnelle des symboles pilotes $d_k^P(m_0)$ dans le module d'estimation 260. Dans ce cas, la poursuite de phase est alors hybride au sens où elle comprend une compensation de phase supervisée au début de chaque paquet (ou d'une pluralité de paquets) et de manière aveugle entre deux estimations supervisées consécutives.

Le module d'estimation de phase 260 peut être réalisé selon différentes variantes décrites ci-après.

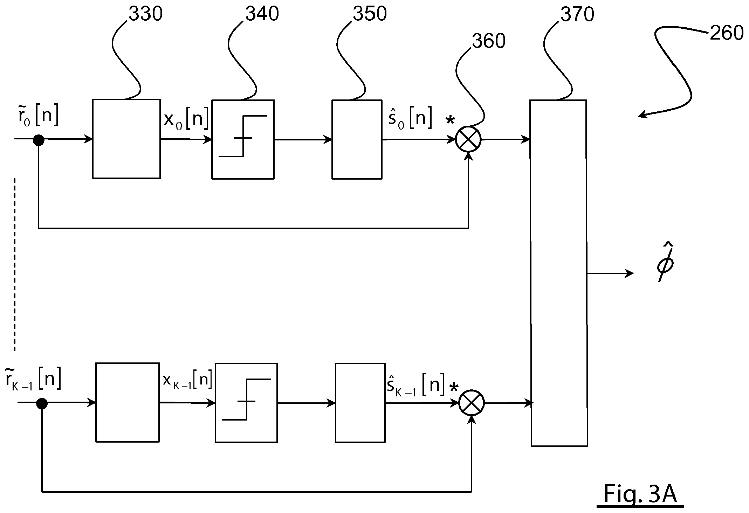

La Fig. 3A représente un module d'estimation de phase selon un premier mode de réalisation.

Celui-ci reçoit les composantes fréquentielles du signal reçu, après démodulation en bande de base, filtrage par le banc de filtres d'analyse et, le cas échéant, égalisation. Ces composantes fréquentielles sont notées $\tilde{r}_k[m]$, $k = 0,..,K - 1$ où $k$ est un indice de sous-porteuse. Le module 330 détermine, pour chacune de ces composantes, la donnée transmise sur la sous-porteuse. Plus précisément, si la sous-porteuse porte une valeur réelle de symbole QAM (par exemple sous-porteuse d'indice pair), la donnée est estimée comme la partie réelle $\hat{d}_k(m) \Re = (\tilde{r}_k[m])$ de la composante alors que si la sous-porteuse porte une valeur imaginaire de symbole QAM (par exemple sous-porteuse d'indice impair), la donnée sera estimée comme la partie imaginaire de cette composante, $\hat{d}_k(m) = \Im(\tilde{r}_k[m])$.

La donnée estimée par le module 330 est ensuite codée sur un bit. Plus précisément, le détecteur de signe 340 détecte le signe de la donnée ainsi estimée, soit $\text{sgn}(\Re(\tilde{r}_k[m]))$ ou $\text{sgn}(\Im(\tilde{r}_k[m]))$ et fournit un bit (symbole BPSK) en conséquence, à savoir -1 si le signe est négatif et +1 si le signe est positif.

Le module 350 construit un symbole simplifié, noté $\hat{s}_k[m]$ à partir du signe détecté par le module 340. Plus précisément :

- si $k$ est pair,

$$\hat{s}_k[m] = \text{sgn}\left(\Re\left(\tilde{r}_k[m]\right)\right) \qquad (6\text{-}1)$$

- si $k$ est impair,

$$\hat{s}_k[m] = j\,\text{sgn}\left(\Im\left(\tilde{r}_k[m]\right)\right) \qquad (6\text{-}2)$$

Le symbole simplifié $\hat{s}_k[m]$ n'est autre qu'une estimation simplifiée, réduite au signe de la donnée portée par la sous-porteuse $k$. Par conséquent, la partie réelle ou la partie imaginaire du symbole simplifié est codée sur un seul bit. Le terme « symbole simplifié » traduit le fait que le symbole QAM (par exemple 64-QAM) est codé sur plusieurs bits alors que le symbole simplifié n'est codé que sur un seul bit (bit de signe).

Un multiplicateur 360 effectue ensuite le produit hermitien $\tilde{r}_k[m]\hat{s}_k^*[m]$ de la composante de la sous-porteuse $k$, $\tilde{r}_k[m]$, avec le symbole simplifié obtenu pour cette même sous-porteuse, $\hat{s}_k[m]$. Les produits hermitiens ainsi obtenus pour les différentes porteuses sont ensuite fournis à un module de calcul qui détermine l'argument $\hat{\phi}$ de la somme de ces produits, c'est-à-dire :

$$\hat{\phi} = \arg\left(\sum_{k=0}^{K-1} \tilde{r}_k[m]\hat{s}_k^*[m]\right) \qquad (7)$$

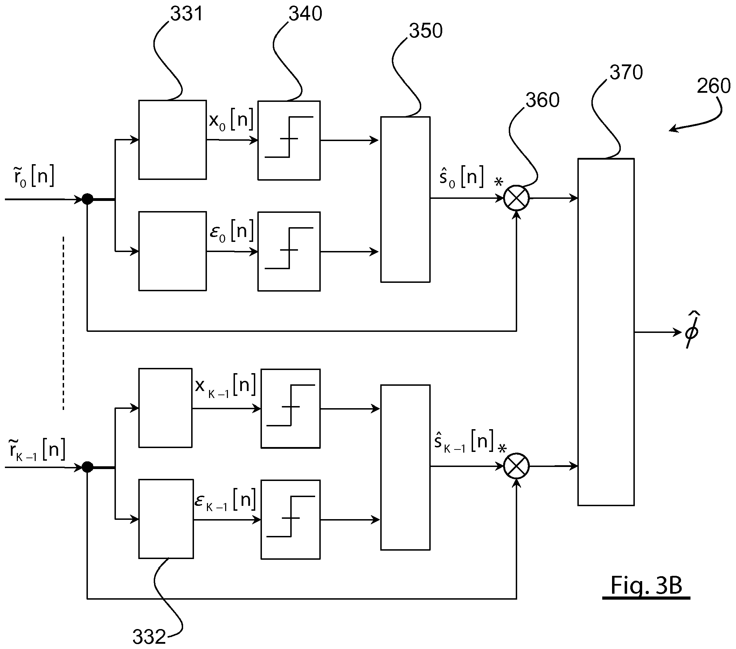

La Fig. 3B représente un module d'estimation de phase selon un second mode de réalisation.

Comme dans le premier mode de réalisation le module d'estimation de phase reçoit les composantes fréquentielles du signal reçu, filtré par la batterie d'analyse. Le cas échéant les composantes fréquentielles, obtenues en sortie de FFT, sont égalisées comme indiqué plus haut. A la différence du premier mode de réalisation, deux symboles simplifiés sont estimés par composante fréquentielle : un premier symbole simplifié correspondant à la donnée elle-même, portée par la sous-porteuse et un second symbole simplifié correspondant à l'interférence sur cette même sous-porteuse, due aux données sur les porteuses adjacentes et aux instants précédents/suivants. Le tableau ci-après donne un exemple d'interférence générée par une donnée conventionnellement égale à 1, portée par la sous-porteuse $k$ à l'instant $m$. La réponse impulsionnelle du filtre prototype est ici de longueur $L = 2$.

|         | $m - 2$ | $m - 1$ | $m$   | $m + 1$ | $m + 2$ |
|---------|---------|---------|-------|---------|---------|
| $k - 1$ | -0.125  | -0.206j | 0.239 | 0.206j  | -0.125  |
| $k$     | 0       | 0.564   | 1     | 0.564   | 0       |
| $k + 1$ | -0.125  | 0.206j  | 0.239 | -0.206j | -0.125  |

A partir d'une valeur de donnée pour une sous-porteuse et un instant $(k,m)$ on sait déterminer, à partir des coefficients du filtre de synthèse, l'interférence générée sur les sous-porteuse adjacentes $(k - 1, k + 1)$ ainsi que pour les instants précédents $(m - 2, m - 1)$ et suivants $(m + 1, m + 2)$.

Les modules 331 estiment tout d'abord les données sur les différentes sous-porteuses. Cette estimation est identique à celle réalisée par les modules 330 dans le premier mode de réalisation.

Les modules 332 estiment quant à eux l'interférence générée sur chaque sous-porteuse. Pour une sous-porteuse donnée, l'interférence est déterminée à partir des données estimées pour les sous-porteuses adjacentes et, le cas échéant pour les instants précédents.

En instant *m* et pour une sous-porteuse *k*, la donnée estimée est notée $\hat{d}_k(m)$ et l'interférence estimée est notée $\hat{i}_k(m)$. Pour chaque sous-porteuse *k*, les deux détecteurs de signe 340 déterminent les signes respectifs de $\hat{d}_k(m)$ et $\hat{i}_k(m)$.

Pour chaque sous-porteuse, le module 350 construit un symbole simplifié, noté $\hat{s}_k[m]$, à partir des signes détectés par les modules 340. Plus précisément :

si *k* est pair,

$$\hat{s}_k[m] = \operatorname{sgn}\left(\hat{d}_k(m)\right) + j\operatorname{sgn}\left(\hat{i}_k(m)\right) \qquad (8\text{-}1)$$

si *k* est impair,

$$\hat{s}_k[m] = \operatorname{sgn}\left(\hat{i}_k(m)\right) + j\operatorname{sgn}\left(\hat{d}_k(m)\right) \qquad (8\text{-}2)$$

On voit donc que la partie réelle et la partie imaginaire du symbole simplifié sont chacune codée sur un seul bit.

Un multiplicateur 360 effectue ensuite le produit hermitien $\tilde{r}_k[m]\hat{s}_k^*[m]$ de la composante de la sous-porteuse *k*, $\tilde{r}_k[m]$, avec le symbole simplifié obtenu pour cette même sous-porteuse, $\hat{s}_k[m]$. Les produits hermitiens obtenus pour les différentes porteuses sont ensuite fournis à un module de calcul, 370, qui détermine comme précédemment l'argument $\hat{\phi}$ par :

$$\hat{\phi} = \arg\left(\sum_{k=0}^{K-1} \tilde{r}_k[m]\hat{s}_k^*[m]\right) \qquad (9)$$

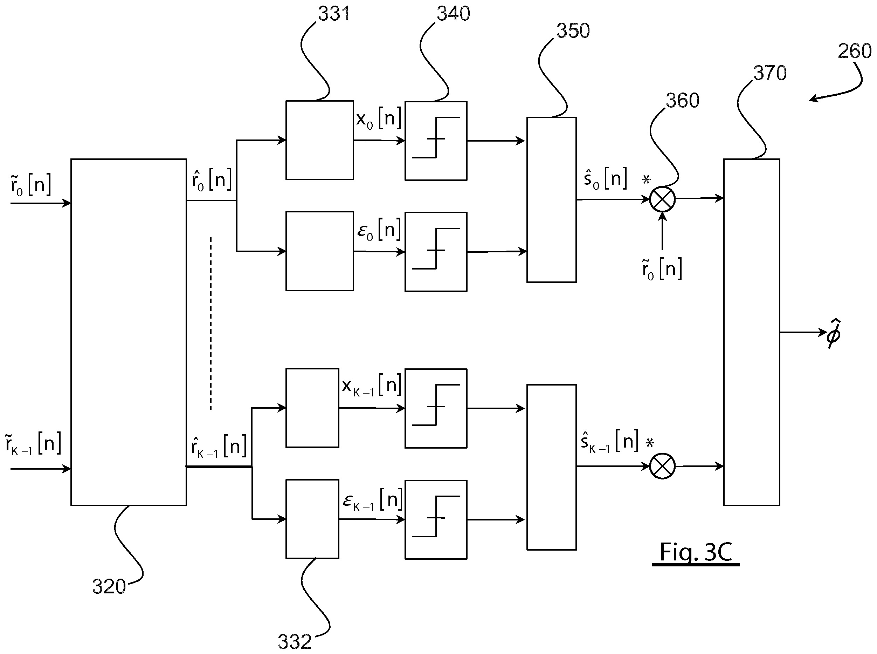

La Fig. 3C représente un module d'estimation de phase selon un troisième mode de réalisation.

Ce mode de réalisation diffère du précédent par la présence du module de régénération 320. Ce module comprend un démodulateur OQAM (identique au démodulateur OQAM, 180, de la Fig. 1), un décodeur canal (mettant en oeuvre par exemple l'algorithme de Viterbi), suivi par un codeur canal un modulateur OQAM (identique au modulateur OQAM, 110, de la Fig. 1). On obtient ainsi en sortie du module 320 des composantes fréquentielles régénérées à partir des données corrigées par le décodage canal. Les symboles simplifiés sont construits à partir de ces composantes fréquentielles régénérées $\hat{r}_0[n],...,\hat{r}_{K-1}[n]$ en lieu et place des composantes fréquentielles originales, $\tilde{r}_0[n],...,\tilde{r}_{K-1}[n]$.

Selon un quatrième mode de réalisation non représenté du module d'estimation de phase, le module de régénération 320 peut être alternativement prévu en amont des modules 330 de la Fig. 3A. Dans ce cas, les données des différentes sous-porteuses sont estimées à partir des composantes fréquentielles régénérées $\hat{r}_0[n],...,\tilde{r}_{K-1}[n]$ en lieu et place des composantes fréquentielles originales, $\tilde{r}_0[n],...,\tilde{r}_{K-1}[n]$, et les symboles simplifiés sont construits à partir des données ainsi estimées, comme expliqué en relation avec la Fig. 3A.

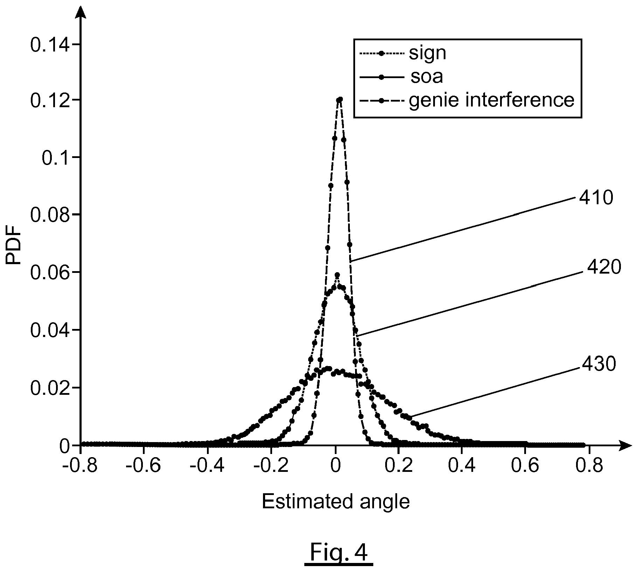

La Fig. 4 illustre les performances de l'estimateur de phase utilisé par le module de poursuite de phase aveugle de la Fig. 3B.

Plus précisément cette figure représente la densité de probabilité de l'erreur d'estimation de phase en radians de différents estimateurs, pour un rapport signal sur bruit de 13dB. La courbe 410 donne la densité de probabilité de l'erreur d'estimation, pour un estimateur de phase idéal, supposant une reconstruction parfaite de l'interférence (estimateur dit « génie » estimant sans erreur le terme d'interférence $I_k(n,\phi)$ de l'équation (5)). La courbe 430 représente la densité de probabilité de l'erreur d'estimation pour un estimateur de phase de l'état de la technique, faisant appel à une estimation partielle de chaque symbole, comme proposé dans l'article P. Amini précité.

Enfin, la courbe 420 donne la densité de probabilité de l'erreur d'estimation de phase pour l'estimateur de la Fig. 3B, c'est-à-dire en utilisant des symboles simplifiés représentant les signes des données et de l'interférence.

On remarquera que l'estimateur de phase de la Fig. 3B est sensiblement meilleur que celui de l'art antérieur et ce pour une complexité moindre.

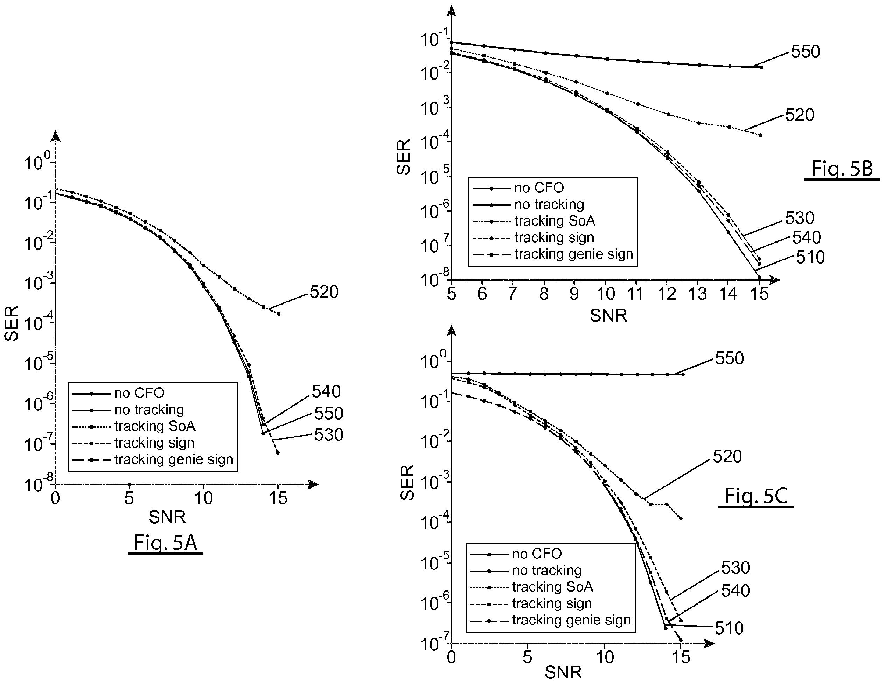

On a représenté en Figs. 5A-5C les courbes de taux d'erreur symbole en fonction du rapport signal sur bruit, pour différentes méthodes de poursuite de phase dans un récepteur FBMC. Les offsets de fréquence entre l'émetteur et le récepteur sont respectivement de 0Hz pour la Fig. 5A, 40 Hz pour la Fig. 5B et de 200Hz pour la Fig. 5C.

Par souci de comparaison, on a en outre représenté sur chaque figure le cas où le récepteur était parfaitement synchronisé avec l'émetteur (offset de fréquence nul, courbe 510).

A l'inverse, on a représenté en 550 le cas où l'on n'effectuait aucune poursuite de phase.

La courbe 520 correspond à une poursuite de phase selon la méthode de l'art antérieur basée sur une estimation partielle des symboles.

La courbe 530 correspond à une poursuite de phase mettant en oeuvre l'estimateur de phase de la Fig. 3B.

Enfin, la courbe 540 correspond à une poursuite de phase idéale pour laquelle on suppose que l'estimateur de phase est de type « génie » (connaissance parfaite du terme d'interférence).

On remarque que, dans tous les cas, la méthode de poursuite de phase selon l'invention conduit à un taux d'erreur symbole plus faible que dans l'art antérieur, et ce d'autant plus que le rapport signal sur bruit est dégradé.

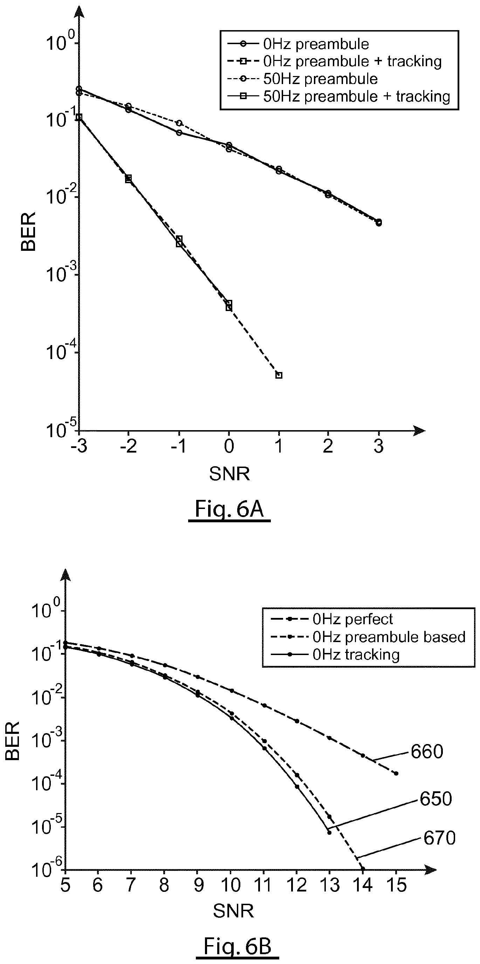

Les Figs. 6A et 6B représentent les performances d'un récepteur FBMC utilisant une méthode de poursuite de phase selon un mode de réalisation de l'invention.

Les performances sont ici relatives à une chaine de réception complète incluant synchronisation, estimation de canal, poursuite de phase et décodage canal. Elles sont par conséquent exprimées en taux d'erreur bit en fonction du rapport signal sur bruit.

Les Figs. 6A et 6B sont relatives respectivement à une modulation QPSK et une modulation 64-QAM. Autrement dit les symboles portés par les sous-porteuses appartiennent à un alphabet de modulation QPSK dans le premier cas et 64-QAM dans le second.

Dans la Fig. 6A la courbe 610 correspond au cas où il n'y a pas d'offset de fréquence entre l'émetteur et le récepteur et où l'estimation de phase est réalisée sur les seuls symboles pilotes du préambule. En d'autres termes, l'estimation de phase est supervisée et aucune poursuite de phase n'est effectuée sur la partie du paquet relative à la charge utile.

La courbe 620 correspond au même cas que celui de la courbe 610, à la différence près que l'on effectue une poursuite de phase sur la charge utile après avoir estimé le déphasage (de manière supervisée) sur le préambule. En ce sens, la courbe 620 est relative à une méthode de poursuite hybride comme défini dans la partie introductive. La poursuite de phase sur la partie utile est réalisée à l'aide du module d'estimation de phase de la Fig. 3B.

Les courbes 630 et 640 sont relatives aux mêmes stratégies de poursuite de phase que les courbes 610 et 620 mais pour un offset de fréquence de 50Hz entre le récepteur et l'émetteur.

On remarque que la poursuite aveugle sur la partie utile du paquet, selon la présente invention, réduit sensiblement le taux d'erreur par rapport à une simple méthode supervisée.

La Fig. 6B représente les performances d'une chaine réception FBMC complète pour une modulation 64-QAM et une absence d'offset de fréquence entre le récepteur et l'émetteur. La courbe 650 est relative au cas idéal ou l'on dispose d'une estimation exacte de l'interférence (estimateur génie), la courbe 660 au cas où l'on effectue une estimation de phase sur le seul préambule (estimation de phase supervisée), sans poursuite de phase sur la partie du paquet relative à la charge utile. Enfin, la courbe 670 est relative au cas où l'on estime la phase sur le préambule mais où l'on effectue ensuite une poursuite de phase sur la partie utile du paquet au moyen du module d'estimation de phase de la Fig. 3B.

On remarque là encore en Fig. 6B que la méthode de poursuite de phase sur la base de symboles simplifiés, comme proposé dans la présente invention, permet d'obtenir des performances très proches du cas idéal pour une complexité algorithmique relativement faible.

## Revendications

1. Méthode de poursuite de phase aveugle pour récepteur FBMC, dans laquelle le signal reçu est démodulé en bande de base, filtré par un banc de filtres d'analyse et soumis à une FFT, pour fournir une pluralité de composantes fréquentielles, chaque composante fréquentielle correspondant à une sous-porteuse, dans laquelle :

   - on estime (330, 331) à partir desdites composantes fréquentielles les données transmises sur chacune des sous-porteuses ;
   - on détermine (340) le signe de chaque donnée ainsi estimée ;
   - on estime (330, 332) à partir des données ainsi estimées l'interférence affectant chacune des sous-porteuses ;
   - on détermine (340) le signe de chaque interférence ainsi estimée ;
   - on construit le symbole simplifié (350) pour chaque sous porteuse à partir du signe de la donnée estimée pour cette sous-porteuse et du signe de l'interférence estimée pour cette sous-porteuse, la partie réelle et la partie imaginaire du symbole simplifié étant chacune codée sur un seul bit ;
   - on estime un déphasage (370) entre les composantes fréquentielles et lesdits symboles simplifiés;
   - on applique une correction de phase (233, 245) aux composantes fréquentielles à partir du déphasage ainsi estimé.

**2.** Méthode de poursuite de phase selon la revendication 1, **caractérisée en ce que** l'estimation des données des sous-porteuses et/ou de l'interférence affectant chacune des sous-porteuses est effectuée à partir de composantes fréquentielles préalablement régénérées, les composantes fréquentielles régénérées étant obtenues (320) à partir des composantes fréquentielles au moyen d'un traitement comprenant une démodulation OQAM, un décodage canal suivi par une nouvelle modulation OQAM.

**3.** Méthode de poursuite de phase selon la revendication 1, **caractérisée en ce que** les composantes fréquentielles font l'objet d'une égalisation avant l'estimation des données et/ou de l'interférence sur chacune des sous-porteuses.

**4.** Méthode de poursuite de phase selon l'une des revendications précédentes, **caractérisée en ce que** ledit déphasage est estimé en faisant la moyenne sur l'ensemble des sous-porteuses des produits hermitiens des composantes fréquentielles avec les symboles simplifiés.

**5.** Méthode de poursuite de phase selon l'une des revendications précédentes, **caractérisée en ce que** le déphasage ainsi estimé est filtré à l'aide d'un filtre passe-bas, qu'un facteur correctif de phase moyen est obtenu à partir du déphasage ainsi filtré et que le facteur correctif de phase moyen est appliqué (233) au signal reçu, après translation en bande de base.

**6.** Méthode de poursuite de phase selon l'une des revendications 1 à 4, **caractérisée en ce que** le déphasage ainsi estimé est filtré à l'aide d'un filtre passe-bas, qu'un facteur correctif de phase moyen est obtenu à partir du déphasage ainsi filtré et que le facteur correctif de phase moyen est appliqué (233) aux dites composantes fréquentielles.

**7.** Méthode de poursuite de phase selon l'une des revendications précédentes, **caractérisée en ce que** le signal reçu se présente sous la forme de paquets, chaque paquet comprenant un préambule et une charge utile, et que ledit déphasage est d'abord estimé dans une première étape, à partir de symboles pilotes appartenant au préambule, puis, dans une seconde étape, au moyen de ladite poursuite de phase aveugle à partir du signal pendant la charge utile.

**Patentansprüche**

**1.** Verfahren zur Blindphasenverfolgung für einen FBMC-Empfänger, wobei das empfangene Signal ins Basisband demoduliert, durch eine Bank von Analysefiltern gefiltert und einer FFT unterworfen wird, um eine Mehrzahl von Frequenzkomponenten zu liefern, wobei jede Frequenzkomponente einem Unterträger entspricht, wobei:

- man ausgehend von den Frequenzkomponenten die Daten abschätzt (330, 331), die auf jedem der Unterträger übertragen werden;
- man das Vorzeichen jedes derart abgeschätzten Datenelements bestimmt (340);
- man ausgehend von den derart abgeschätzten Daten die Interferenz abschätzt (330, 332), die jeden der Unterträger betrifft;
- man das Vorzeichen jeder derart abgeschätzten Interferenz bestimmt (340);
- man das vereinfachte Symbol (350) für jeden Unterträger ausgehend von dem Vorzeichen des für diesen Unterträger abgeschätzten Datenelements und des Vorzeichens der für diesen Unterträger abgeschätzten Interferenz konstruiert, wobei der Realteil und der Imaginärteil des vereinfachten Symbols jeweils auf einem einzigen Bit codiert sind;
- man eine Phasenverschiebung (370) zwischen den Frequenzkomponenten und den vereinfachten Symbolen abschätzt;
- man eine Phasenkorrektur (233, 245) auf die Frequenzkomponenten ausgehend von der derart abgeschätzten Phasenverschiebung anwendet.

**2.** Verfahren zur Phasenverfolgung nach Anspruch 1, **dadurch gekennzeichnet, dass** die Abschätzung der Daten der Unterträger und/oder der Interferenz, die jeden der Unterträger betrifft, ausgehend von zuvor wieder erzeugten Frequenzkomponenten erfolgt, wobei die wieder erzeugten Frequenzkomponenten ausgehend von den Frequenzkomponenten mit Hilfe einer Verarbeitung erhalten werden (320), die eine OQAM-Demodulation umfasst, eine Kanaldecodierung gefolgt von einer neuen OQAM-Modulation.

**3.** Verfahren zur Phasenverfolgung nach Anspruch 1, **dadurch gekennzeichnet, dass** die Frequenzkomponenten Gegenstand einer Entzerrung vor der Abschätzung der Daten und/oder der Interferenz auf jedem der Unterträger sind.

**4.** Verfahren zur Phasenverfolgung nach einem der vorhergehenden Ansprüche, **dadurch gekennzeichnet, dass** die Phasenverschiebung abgeschätzt wird durch Mittelung, über die Gesamtheit der Unterträger, der hermiteschen Produkte der Frequenzkomponenten mit den vereinfachten Symbolen.

**5.** Verfahren zur Phasenverfolgung nach einem der vorhergehenden Ansprüche, **dadurch gekennzeichnet, dass** die derart abgeschätzte Phasenverschiebung mit Hilfe eines Tiefpassfilters gefiltert wird, dass ein Durchschnittsphasen-Korrekturfaktor ausgehend von der derart gefilterten Phasenverschiebung erhalten wird, und dass der Durchschnittsphasen-Korrekturfaktor auf das empfangene Signal nach Umsetzung ins Basisband angewandt wird (233).

**6.** Verfahren zur Phasenverfolgung nach einem der Ansprüche 1 bis 4, **dadurch gekennzeichnet, dass** die derart abgeschätzte Phasenverschiebung mit Hilfe eines Tiefpassfilters gefiltert wird, dass ein Durchschnittsphasen-Korrekturfaktor ausgehend von der derart gefilterten Phasenverschiebung erhalten wird, und dass der Durchschnittsphasen-Korrekturfaktor auf die Frequenzkomponenten angewandt wird (233).

**7.** Verfahren zur Phasenverfolgung nach einem der vorhergehenden Ansprüche, **dadurch gekennzeichnet, dass** das empfangene Signal die Form von Paketen aufweist, wobei jedes Paket eine Präambel und eine Nutzlast umfasst, und dass die Phasenverschiebung zunächst in einem ersten Schritt ausgehend von Steuersymbolen abgeschätzt wird, die zur Präambel gehören, und dann, in einem, zweiten Schritt, mit Hilfe der Blindphasenverfolgung ausgehend von dem Signal während der Nutzlast.

**Claims**

**1.** Blind phase tracking method for FBMC receiver, whereby the received signal is demodulated into baseband, filtered by an analysis filter bank and subjected to FFT, in order to provide a plurality of frequency components, whereby each frequency component corresponds to a sub-carrier, in which:

- one estimates (330, 331) the data transmitted on each subcarrier from the said frequency components;
- one determines (340) the sign of the data thus estimated;
- one estimates 30,332) from the data thus estimated the interference affecting each of the subcarriers;
- one determines (340) the sign of each interference thus estimated;
- one constructs a simplified symbol (350) for each subcarrier from the sign of the estimated data for this subcarrier and the sign of the estimated interference for this subcarrier, whereby the real and the imaginary part of the simplified symbol is each encoded in a single bit;
- one estimates a phase difference (370) between the frequency components and the said simplified symbols;
- one applies a phase correction (233, 245) to the frequency components from the phase difference thus estimated.

**2.** Phase tracking method according to claim 1, **characterised in that** the estimation of the data of the subcarriers and/or interference affecting each of the subcarriers is effected from previously regenerated frequency components, whereby the regenerated frequency components are obtained (320) from frequency components by means of processing comprising OQAM demodulation and channel decoding followed by a new OQAM modulation.

**3.** Phase tracking method according to claim 1, **characterised in that** the frequency components are subject to equalisation before the estimation of the data and/or interference on each of the subcarriers.

**4.** Phase tracking method according to any of the precedent claims, **characterised in that** the said phase shift is estimated by averaging over all subcarriers of the Hermitian products of the frequency components with the simplified symbols.

**5.** Phase tracking method according to any of the precedent claims, **characterised in that** the phase shift thus estimated is filtered using a low pass filter, whereby a mean phase correction factor is obtained from the phase shift thus filtered, while the mean phase correction factor is applied (233) to the received signal, after translation to baseband.

**6.** Phase tracking method according to any of claims 1 to 4, **characterised in that** the phase shift thus estimated is filtered using a low pass filter, whereby a mean phase correction factor is obtained from the phase shift thus filtered, while the average phase correction factor is applied (233) to the said frequency components.

7. Phase tracking method according to any of the preceding claims, **characterised in that** the received signal is in the form of packets, whereby each packet comprises a preamble and a payload, and whereby the said phase difference is estimated first in a first step from pilot symbols belonging to the preamble and then, in a second step, by means of the said blind phase tracking from the signal during the payload.

$$\underline{\text{Fig. 1}}$$

Fig.2

Fig.3A

Fig. 3B

Fig. 3C

Fig. 4

Fig.5B

Fig.5C

Fig.5A

SNR

SER

- no CFO
- no tracking
- tracking SoA
- tracking sign
- tracking genie sign

Fig. 6A

Fig. 6B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. FARHANG-BOUROUJENY.** OFDM versus filter bank multicarrier. *IEEE Signal Processing Magazine,* Mars 2011, 91-112
- **B. HIROSAKI.** An orthogonally multiplexed QAM system using the discrète Fourier transform. *IEEE Trans on Comm.,* Juillet 1981, vol. 29 (7), 982-989
- **P. SIOHAN et al.** Analysis and design of OFDM/OQAM systems based on filterbank theory. *IEEE Trans. on signal processing,* Mai 2002, vol. 50 (5), 1170-1183

- **M. BELLANGER et al.** *FBMC physical layer : a primer, www.ict-phydyas.org*
- **M. SPETH et al.** Optimum receiver design for OFDM-based broadband transmission-Part II. *IEEE Trans. on Comm.,* 04 Avril 2011, vol. 49, 571-578
- **P. AMINI et al.** Packet format design and decision directed tracking methods for filter bank multicarrier systems. *EURASIP Journal on Advances in Signal Processing,* 2010